# EUROPEAN PATENT APPLICATION

(11) **EP 2 799 970 A1**
(43) Date of publication of application: **05.11.2014**
(21) Application number: 13199110.1
(22) Date of filing: 20.12.2013
(51) Int. Cl.: G06F 3/0488, G06F 3/041

(54) **Touch screen panel display and touch key input system**

(30) Priority: 02.05.2013 KR 20130049193
(71) Applicant: Samsung Electronics Co., Ltd, Gyeonggi-do 443-742 (KR)
(72) Inventor: Park, Jung-Hoon, 443-742 Gyeonggi-do (KR); Son, Yoon-Kook, 443-742 Gyeonggi-do (KR); Lee, Heon-Seok, 443-742 Gyeonggi-do (KR)
(74) Representative: Gover, Richard Paul

(57) **Abstract**

A Touch Screen Panel, TSP, display (400) and touch key input apparatus (406) comprises a TSP display providing detected touch coordinate information via a plurality of sensing channels. A touch key has a touch key sensor (406) connected to a particular one of the plurality of sensing channels (Y7). A touch recognition unit (402) distinguishes between a first touch input via the TSP display and a second touch input via the touch key sensor, in response touch detection scanning of the plurality of sensing channels. Also, the touch recognition unit identifies the distinguished first touch input and second touch input.

## Description

### BACKGROUND

### Field of the invention

The present invention relates to a system employing a Touch Screen Panel (TSP) display and touch keys for sensing a touch with respect to a TSP display and a touch key and recognizing a touch input.

### Description of the Related Art

Known touch screens provide UI (user interface) screens displaying graphics and text and sensing and reacting to contact on a screen. A device using a touch screen may display one or more soft keys, menus, and other UI objects on the screen. A user generates an input related to a UI object through a touch in a position corresponding to the UI object displayed on the screen. The touch refers to contacting the screen with a means such as a stylus or contacting the screen with a part of a human body such as a finger. The contact may include approaching the screen as well as directly contacting the screen, depending on a touch input method. The contact may also include maintaining the contact for a short or long time duration or moving the contact slowly or fast in various ways according to various gestures a user desires to input.

Known mobile devices such as smart phones employ a display-integrated touch scheme using a touch sensor in a display panel. The display-integrated touch scheme does not use a separate TSP improving image quality and touch sensitivity. As a number of touch screen panel layers is reduced, thickness and weight of the display are reduced, facilitating providing ultra-thin screens and improving luminance, thus enhancing outdoor visibility. The display-integrated touch scheme includes an on-cell method and an in-cell method. For example, an On-Cell Touch screen panel Active matrix organic light emitting diode (OCTA) is a display using the on-cell method. Herein, a display using the display-integrated touch scheme is referred to as a TSP display.

A device using a TSP display may include a touch key as an input means as well as the TSP display itself. For example, a touch key may be disposed on a front surface of the device in a region other than the TSP display and may be used as a key for executing a particular function, for example, a menu button, a home button, or a back button of a mobile device such as a smart phone. When a touch key is implemented in a region other than the TSP display, a sensing channel for the touch key is assigned in a TSP Integrated Circuit (IC) in addition to the TSP IC for the TSP display. The TSP IC is an IC touch controller implemented that scans sensing channels assigned to a TSP display and senses touch coordinates associated with a touch. The touch controller provides the sensed touch coordinates data corresponding to a touch input in a device using the TSP display as input data.

In a touch controller for a TSP display, in order to assign a sensing channel for a touch key, a separate sensing channel needs to be added to a touch controller for the TSP display. However, generally, a TSP IC is designed to assign all sensing channels for the TSP display. As a result, an existing TSP IC typically cannot be extended to sense a touch input through a TSP display as well as a touch key.

### SUMMARY

Known systems require separate controllers to sense both a touch of a touch key and touch via a TSP display resulting in a complex input data structure. A system according to invention principles addresses this deficiency and related problems. The system recognizes both a touch via a TSP display and a touch key with a single controller and without additional use of a touch controller for the touch key.

A Touch Screen Panel (TSP) display and touch key input apparatus comprises a TSP display providing detected touch coordinate information via a plurality of sensing channels. A touch key having a touch key sensor is connected to a particular one of the plurality of sensing channels. A touch recognition unit distinguishes between a first touch input via the TSP display and a second touch input via the touch key sensor, in response touch detection scanning of the plurality of sensing channels. The touch recognition unit identifies the distinguished first touch input and second touch input.

In a feature of the invention, a touch controller senses at least one touch coordinate of a touch via one of the TSP display and the touch key sensor by scanning the sensing channels and a processor recognizes the touch as one of the first touch input with respect to the TSP display and the touch second input with respect to the touch key sensor based on whether the at least one touch coordinate comprise both an X-axis coordinate and a Y-axis coordinate. The processor recognizes the touch as the first touch input with respect to the touch key sensor, if the at least touch coordinate comprises a single one of, the X-axis coordinate or the Y-axis coordinates of an axis corresponding to a sensing channel connected to the touch key sensor. The processor identifies a touch key matched to touch coordinate of the second touch input in preset TSP key matrix information, and the TSP key matrix information comprises information in which a touch key corresponding to the touch key sensor is mapped to coordinates corresponding to a sensing channel connected to the touch key sensor.

In a feature, the processor recognizes the touch as the second touch input with respect to the TSP display if the at least touch coordinate comprises both the X-axis coordinate and the Y-axis coordinate. The touch key sensor is implemented in a region other than the TSP display on a rear surface of window glass disposed on the TSP display.

In a further feature of the invention a method detects input from both a Touch Screen Panel (TSP) display and a touch key. The method includes sensing at least one touch coordinate of a touch via one of the TSP display and the touch key by scanning a plurality of sensing channels of the TSP display. The touch key has a touch key sensor being connected to a particular one of the plurality of sensing channels and being located outside an area of the TSP display. The method distinguishes between a first touch input via the TSP display and a second touch input via the touch key sensor, in response touch detection scanning of the plurality of sensing channels. The method identifies the distinguished first touch input and second touch input. The distinguishing comprises recognizing the touch as one of the first touch input with respect to the TSP display and the second touch input with respect to the touch key sensor based on whether the at least one touch coordinate comprise both an X-axis coordinate and a Y-axis coordinate. Further, the distinguishing comprises recognizing the touch as the second touch input with respect to the touch key sensor, if the at least one touch coordinate comprise a single one of either the X-axis coordinate or the Y-axis coordinates of an axis corresponding to a sensing channel connected to the touch key sensor.

In another feature of the invention the method identifies a touch key matched to touch coordinate of the second touch input in preset TSP key matrix information, wherein the TSP key matrix information comprises information in which a touch key corresponding to the touch key sensor is mapped to coordinate corresponding to a sensing channel connected to the touch key sensor. The distinguishing comprises recognizing the touch as the first touch input with respect to the TSP display if the at least one touch coordinate comprises both an X-axis coordinate and a Y-axis coordinate.

### BRIEF DESCRIPTION OF THE DRAWINGS

The above and other aspects, features and advantages of a certain embodiment of the present invention will be more apparent from the following detailed description taken in conjunction with the accompanying drawings, in which:
FIG. 1 shows a diagram illustrating a known mobile device using a TSP display and a touch key;
FIG. 2 shows a diagram illustrating a known structure related to the TSP display and the touch key in the mobile device illustrated in FIG. 1;
FIG. 3 shows a diagram illustrating a known TSP display and touch key input apparatus;
FIG. 4 shows a diagram illustrating a TSP display and touch key input apparatus according to invention principles; and
FIG. 5 shows a flowchart illustrating a TSP display and touch key input method according to invention principles.

Throughout the drawings, like reference numerals will be understood to refer to like parts, components, and structures.

### DETAILED DESCRIPTION

Hereinafter, an embodiment of the present invention are described in detail with reference to the accompanying drawings. Throughout the drawings, identical components are referred to as identical reference numerals. The following description using reference numerals of the attached drawings is intended to facilitate comprehensive understanding of the embodiment of the present invention as defined in the claims and equivalents thereof.

To help understanding of the embodiment of the present invention, various specific details are included, but they should be regarded as being illustrative. Therefore, those of ordinary skill in the art may recognize that various changes and modifications of the embodiment described below may be made without departing the scope and spirit of the present invention. Moreover, description of well-known functions or components may be omitted for clarity and brevity.

Terms and words used in the following description and claims are not limited to the bibliographical meanings, but, are merely used by the inventor to enable a clear and consistent understanding of the invention. Accordingly, definitions of the terms and words should be made based on all the details of the specification.

In the following description, an embodiment of the present invention is applied to a device using a Touch Screen Panel (TSP) display, for example. However, the embodiment of the present invention may also be applied to other similar devices. In addition, the present invention may be applied to other devices through modifications by those of ordinary skill in the art without departing from the scope of the present invention. For example, the embodiment of the present invention may be similarly applied to a Personal Computer (PC) such as a desktop computer or a laptop computer as well as a mobile device as long as the device includes a touch screen and a touch key.

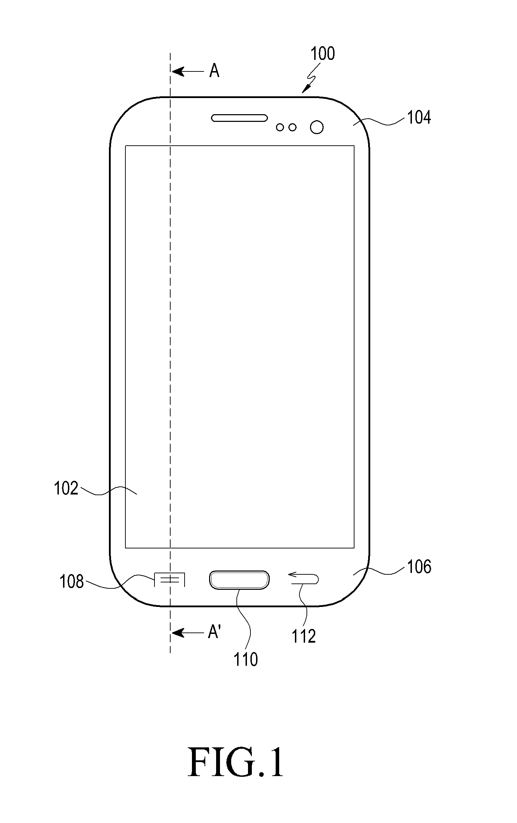

To help understanding of the embodiment of the present invention, a description is made of input with respect to a known Touch Screen Panel (TSP) display and input of a touch key in a general mobile device using the TSP display and the touch key with reference to FIGs. 1 through 3.

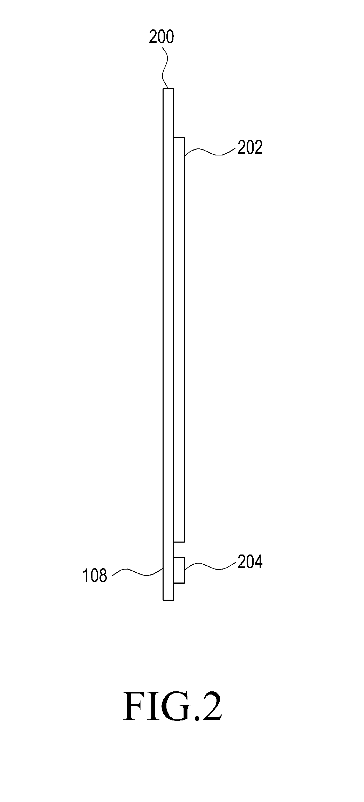

FIG. 1 shows a diagram illustrating a known mobile device using a TSP display and a touch key. FIG. 1 illustrates a front surface of a general mobile device 100 such as a smart phone, which employs a TSP display and a touch key. FIG. 2 shows a diagram illustrating a structure associated with the TSP display and the touch key of the mobile device 100 illustrated in FIG. 1. FIG. 2 is a side view schematically showing a structure associated with a TSP display and a touch key by cutting the mobile device 100 along a dotted line A - A' illustrated in FIG. 1.

Referring to FIGs. 1 and 2, in the mobile device 100, a TSP display region 102 comprises a TSP display 202. On a front surface of the TSP display 202, window glass 200 is installed. On the window glass 200, a touch key may be provided in regions 104 and 106 other than in TSP display region 102. The TSP display 202 is a part of a display-integrated touch system as described above, and touch keys are provided in a region other than the TSP display region 102.

FIGs. 1 and 2 show an example in which touch keys 108 - 112 are implemented in region 106 and are used as, for example, a menu button, a home button, and a back button, respectively. For the home button, a physical button instead of the touch key 110 may be used. In order to sense and recognize a touch on each of the touch keys 108 - 112, a touch key sensor corresponding to each of the touch keys 108 - 112 is implemented on a rear surface corresponding to the region 106 other than the TSP display region 102 on the window glass 200. FIG. 2 illustrates an example in which a touch key sensor 204 corresponding to the touch key 108 is implemented on the rear surface corresponding to the region 106 on the window glass 200.

As such, in the mobile device 100 using the TSP display 202, the touch keys 108 - 112 and touch key sensors corresponding thereto are implemented separately from the TSP display 202. Thus, to sense and recognize a touch with respect to each of the touch keys 108 - 112 by means of touch key sensors, a sensing channel for a touch key needs to be assigned in a TSP Integrated Circuit (IC) for the TSP display 202 or a TSP IC for a touch key is required in addition to the TSP IC for the TSP display 202. Additional assignment of a sensing channel for a touch key in the TSP IC for the TSP display 202 needs modification of the TSP IC for the TSP display 202 or a TSP IC for the touch key needs to be separately added.

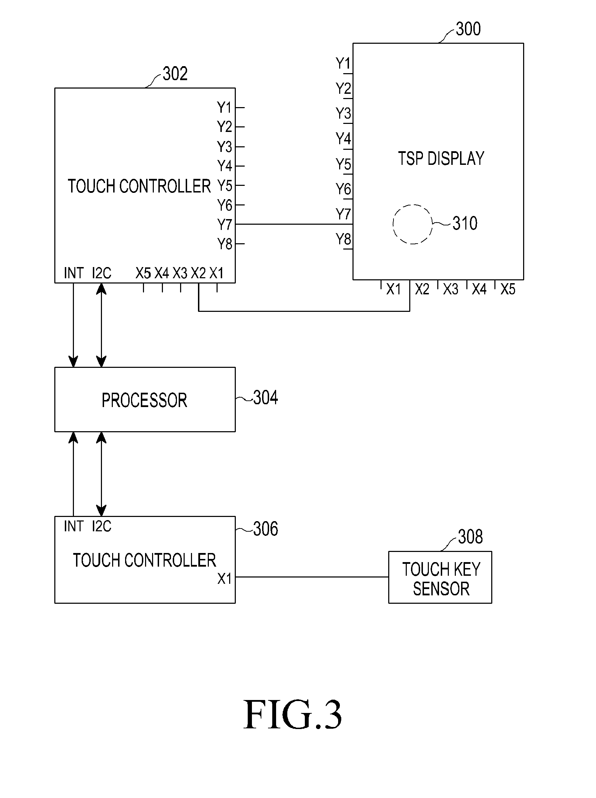

FIG. 3 shows a diagram illustrating a known TSP display and touch key input apparatus. When a touch key is implemented in a region other than the TSP display 202 in the mobile device 100 using the TSP display 202, as illustrated in FIGs. 1 and 2, a touch controller for the touch key is added to a touch controller for the TSP display 202. A TSP display 300 and a touch key sensor 308, touch controllers 302 and 306 are separately employed. Touch controller 302 is connected to TSP display 300 and touch controller 306 is connected to the touch key sensor 308. Touch controllers 302 and 306 comprise TSP ICs, for example.

X1 - X5 and Y1 - Y8 sensing channels of the touch controller 302 are assigned to the TSP display 300. Although detailed illustration of the TSP display 300 is omitted, generally, a TSP display includes X-axis sensor patterns arranged in an X-axis direction intersecting Y-axis sensor patterns arranged in a Y-axis direction. The X1 - X5 sensing channels of the touch controller 302 are assigned to the X-axis sensor patterns corresponding to X-axis coordinates among the sensor patterns of the TSP display 300 in one-to-one correspondence, and the Y1 - Y8 sensing channels of the touch controller 302 are assigned to the Y-axis sensor patterns corresponding to Y-axis coordinates Y1 - Y8 among the sensor patterns of the TSP display 300 in one-to-one correspondence. In order to avoid complexity, only X2 and Y7 sensing channels are shown connected between the touch controller 302 and the TSP display 300, but the other sensing channels are also connected.

For a touch on the TSP display 300, a touch position is recognized using the assigned X-axis and Y-axis sensing channels. A touch on the touch key sensor 308 is recognized using an assigned one of the X-axis or Y-axis sensing channels. FIG. 3 illustrates an example in which an X1 sensing channel of the touch controller 306 is assigned to the touch key sensor 308. The touch key sensor 308 may be implemented on the rear surface of the window glass 200 like the touch key sensor 204 illustrated in FIG. 2.

Although one touch key sensor 308 is illustrated as being connected to the touch controller 306 to avoid complexity, if the device 100 includes multiple touch keys 108 - 112 as in FIG. 1, the multiple touch key sensors corresponding to the touch keys 108 - 112 are connected to the touch controller 306. In this case, the sensing channels of the touch controller 306 are assigned to the respective touch key sensors in one-to-one correspondence.

The touch controllers 302 and 306 are connected to a processor 304 through interrupt terminals INT and inter-integrated circuit I2C bus. The processor 304 may be a processor which executes an operation corresponding to a touch input in a device to which a TSP display and touch key input apparatus illustrated in FIG. 3 is applied. For example, the processor 304 may be an Application Processor (AP) that is a main processor for a mobile device. Once sensing a touch, the touch controllers 302 and 306 interrupt the processor 304 and delivers sensed touch coordinates to the processor 304 through the inter-integrated circuits I2C bus.

For example, if there is a touch on a region 310 on the TSP display 300, the touch controller 302 senses the touch through an X2 sensing channel and a Y7 sensing channel assigned to an X-axis touch sensor pattern and a Y-axis touch sensor pattern on the region 310. The touch controller 302 senses touch coordinates X2 and Y7, stores them in an internal register, and interrupts the processor 304. Then, the processor 304 reads the internal register of the touch controller 302 to recognize the touch coordinates X2 and Y7, and executes a key matched to the touch coordinates X2 and Y7 in preset TSP key matrix information. The TSP key matrix information includes information in which keys to be executed are mapped to respective combinations of X-axis touch coordinates and Y-axis touch coordinates.

If there is a touch on the touch key sensor 308, the touch controller 306 senses the touch through an X1 sensing channel assigned to the touch key sensor 308. The touch controller 306 senses touch coordinate X1, stores them in an internal register, and interrupts the processor 304. The processor 304 reads the internal register of the touch controller 306 to recognize the touch coordinate X1 and identify a touch key matched to the touch coordinate X1 based on preset touch key matrix information. If multiple touch key sensors are used, the touch key matrix information includes information identifying keys using coordinate mapping information corresponding to sensing channels connected to the multiple touch key sensors.

In order to sense a touch on a touch key while using an existing touch controller, two touch controls 302 and 306 for the TSP display and the touch key are used in a known system. When the touch controller 306 for the touch key is additionally used, not only the touch controller 306, but also additional lines such as an INT line and an I2C line for connecting the added touch controller 306 to the processor 304 are required. The known system occupies additional space on a Flexible Printed Circuit Board (FPCB).

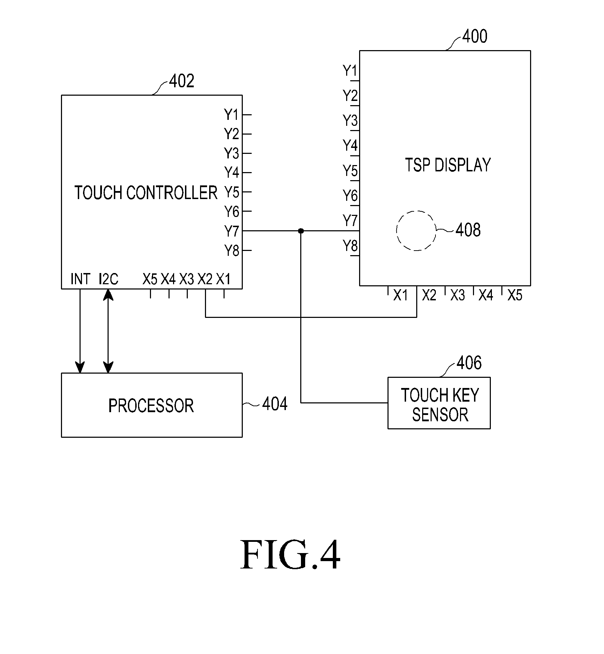

FIG. 4 is a diagram illustrating a TSP display and touch key input apparatus according to an embodiment of the present invention. In FIG. 4, when a touch key is implemented in a region other than the TSP display 202 in the device 100, a touch controller for the TSP display 202 is shared for input from both the TSP display 202 and the touch key without addition of a separate touch controller for the touch key. A single touch controller 402 is shared for a TSP display 400 and a touch key sensor 406 so touch controller 402 is connected to the touch key sensor 406 as well as the TSP display 400 and touch controller 402 may comprise a TSP IC.

The X1 - X5 and Y1 - Y8 sensing channels of the touch controller 402 are assigned to the TSP display 400. In this example, the touch controller 402 and the TSP display 400 and connection therebetween are the same as the touch controller 302 and the TSP display 300 illustrated in FIG. 3. Therefore, a description of the touch controller 402 and the TSP display 400, which is the repetition of the description of the touch controller 302 and the TSP display 300, is omitted.

The touch key sensor 406 is connected to the Y7 sensing channel of the touch controller 402. The touch key sensor 406 may be connected to either one of the X-axis sensing channels or one of the Y-axis sensing channels of the touch controller 402 in other embodiments. The touch key sensor 406 may be implemented on the rear surface of the window glass 200 like the touch key sensor 204 illustrated in FIG. 2, for example. Although only one touch key sensor 406 is illustrated as being connected to the touch controller 402 to avoid complexity, if the device 100 includes the multiple touch keys 108 - 112 in FIG. 1, multiple touch key sensors corresponding to the touch keys 108 - 112, respectively, may be connected to the touch controller 402. In this case, the multiple touch key sensors are connected to different sensing channels of the touch controller 402, respectively.

The touch controller 402 is connected to a processor 404 through the interrupt terminals INT and the inter-integrated circuit I2C bus. The processor 404 performs an operation corresponding to a touch input in a device to which the TSP display and touch key input apparatus illustrated in FIG. 4 is applied. For example, in a mobile device, the processor 404 may be a main processor. Upon sensing a touch, the touch controller 402 interrupts the processor 404 and delivers the sensed at least one touch coordinate to the processor 404 through the inter-integrated circuit I2C bus.

For example, if there is a touch on a region 408 on the TSP display 400, the touch controller 402 senses the touch through the X2 sensing channel and the Y7 sensing channel respectively assigned to the X-axis touch sensor pattern and the Y-axis touch sensor pattern on the region 408, stores the sensed touch coordinates in the internal register, and interrupts the processor 404. Then, the processor 404 reads the internal register of the touch controller 402 to recognize the touch coordinates X2 and Y7 and identifies a key matched to the touch coordinates X2 and Y7 based on preset TSP key matrix information.

According to an embodiment of the present invention, the TSP key matrix information identifies keys by a mapping to respective combinations of X-axis touch coordinates and Y-axis touch coordinates and also identifies a touch key corresponding to the touch key sensor 406 is mapped to the coordinate Y7 corresponding to the Y7 sensing channel connected to the touch key sensor 406. If multiple touch key sensors are used, TSP key matrix information includes information in mapping touch key coordinates corresponding to each of sensing channels connected to the multiple touch key sensors, respectively.

If there is a touch on the touch key sensor 406, the touch controller 402 senses the touch through the Y7 sensing channel assigned to the touch key sensor 406. The touch controller 402 senses the touch coordinate Y7, stores coordinate data, and interrupts the processor 404. Processor 404 reads the internal register of the touch controller 402 to recognize the touch coordinate Y7, and indicates a touch key matched to the touch coordinate Y7 based on the TSP key matrix information. Processor 404 distinguishes and recognizes a touch input on the TSP display 400 and a touch input on the touch key sensor 406 if the at least one touch coordinate of a touch sensed by the touch controller 402 include line Y7.

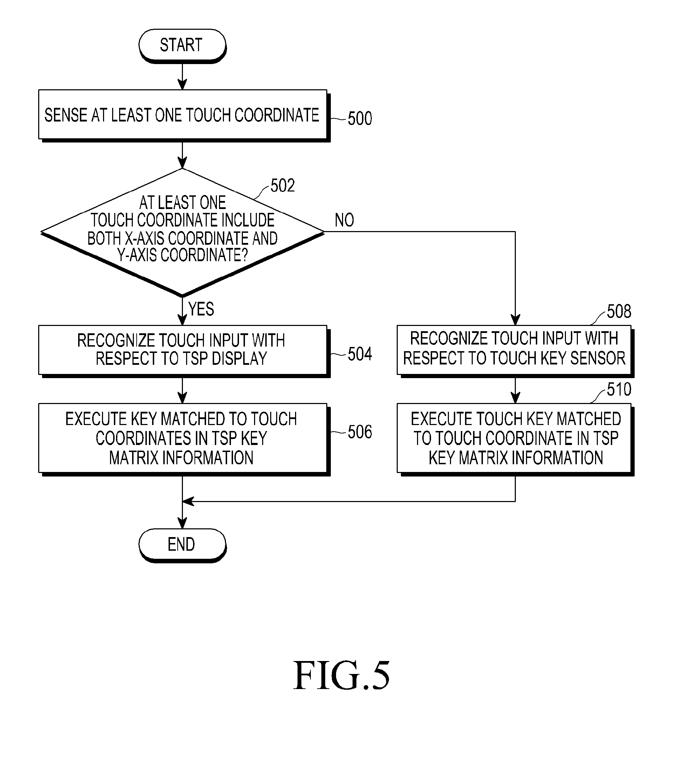

FIG. 5 shows a flowchart illustrating a TSP display and touch key input method in which the processor 404 distinguishes and recognizes a touch input on the TSP display 400 and a touch input on the touch key sensor 406. In response to the touch controller 402 sensing at least one touch coordinate in step 500, the processor 404 determines whether the at least one touch coordinate include both an X-axis coordinate and a Y-axis coordinate in step 502.

The sensed TSP touch coordinates comprise both the X-axis coordinate and the Y-axis coordinate so if there is a touch on the region 408 on the TSP display 400, the at least one touch coordinate sensed by the touch controller 402 are X2 and Y7. On the other hand, if the touch controller 402 senses the touch coordinate of the touch on the touch key sensor 406, the at least one touch coordinate include only a Y-axis coordinate Y7. Even when the touch key sensor 406 is connected to another sensing channel of the touch controller 402 instead of the Y7 sensing channel unlike in FIG. 4, the at least one touch coordinate include either an X-axis coordinate or a Y-axis coordinate corresponding to the sensing channel connected to the touch key sensor 406.

If the processor 404 determines that the at least one touch coordinate includes both the X-axis coordinate and the Y-axis coordinate, for example the touch coordinates X2 and Y7, in step 502, the processor 404 recognizes the touch coordinates X2 and Y7 as a touch input on the TSP display 400 in step 504, and identifies a key matched to the touch coordinates X2 and Y7 using TSP key matrix information in step 506. However, if the processor 404 determines that the at least one touch coordinate include either the X-axis coordinate or the Y-axis coordinate, for example the touch coordinate Y7, in step 502, the processor 404 recognizes the touch coordinate Y7 as a touch input on the touch key sensor 406 in step 508, and executes a touch key matched to the touch coordinate Y7 in the TSP key matrix information in step 510.

Thus, by using one existing touch controller, a touch on a TSP display and a touch on a touch key are sensed and a touch input on the TSP display and a touch input on the touch key sensor may be distinguished and recognized. Hence, the structure of the TSP display and touch key input apparatus may be simply implemented.

While a detailed embodiment of the present invention has been described above, various modifications may be possible without departing from the scope of the present invention. For example, in the disclosed embodiment of the present invention, the touch controller 402 and the processor 404 are separately configured. However, the touch controller 402 and the processor 404 may be manufactured as a component such as an IC into which they are integrated. Also in this case, the embodiment of the present invention may be applied in the same manner. In this case, the component including the touch controller 402 and the processor 404 operates as a touch recognition unit. Therefore, the touch recognition unit distinguishes and recognizes a touch input with respect to the TSP display 400 and a touch input with respect to the touch key sensor 406 based on at least one touch coordinate of a touch sensed by scanning with respect to the sensing channels assigned to the TSP display 400.

The embodiment of the present invention is described as being applied to a device using a TSP display of a display-integrated touch scheme. However, the embodiment of the present invention may also be applied in the same manner also in a touch screen scheme other than the display-integrated touch scheme, if a touch key sensor is implemented in a region other than a touch screen.

Moreover, if the TSP display and touch key input method is applied to a mobile terminal, the mobile terminal may be used for TSP display and touch key input by downloading a program (for example, an application) for TSP display and touch key input from a program providing apparatus (for example, a server) located in a remote place or installing the program and executing the program. That is, if the program for TSP display and touch key input is installed on the mobile device, the program may be executed on the mobile device to provide TSP display and touch key input. The program providing device transmits the program to the mobile device in response to a request for transmission of the program from the mobile device or automatically. The program providing device may additionally perform service subscription determination, user authentication, and payment information checking with respect to the mobile device. The program providing device may include a communication unit for performing wired or wireless communication with the mobile device, a storage medium for storing the program, and a controller for transmitting the program to the mobile device through the communication unit. The storage medium may be located inside or outside the program providing device.

The above-described embodiments can be implemented in hardware, firmware or via the execution of software or computer code that can be stored in a recording medium such as a Compact Disk Read Only Memory (CD ROM), an Random Access Memory (RAM), a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an Application Specific Integrated Circuit (ASIC) or Field Programmable Gate Array (FPGA). As would be understood in the art, the computer, the processor, microprocessor controller or the programmable hardware include memory components, e.g., RAM, Read Only Memory (ROM), Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. The functions and process steps herein may be performed automatically or wholly or partially in response to user command. An activity (including a step) performed automatically is performed in response to executable instruction or device operation without user direct initiation of the activity. No claim element herein is to be construed under the provisions of 35 U.S.C. 112, sixth paragraph, unless the element is expressly recited using the phrase "means for."

## Claims

1. A Touch Screen Panel (TSP) display and touch key input apparatus **characterized by**:
a TSP display providing detected touch coordinate information via a plurality of sensing channels;
a touch key having a touch key sensor connected to a particular one of the plurality of sensing channels; and
a touch recognition unit for,
distinguishing between a first touch input via the TSP display and a second touch input via the touch key sensor, in response touch detection scanning of the plurality of sensing channels and
identifying the distinguished first touch input and second touch input.

2. The TSP display and touch key input apparatus of claim 1, wherein the touch recognition unit **characterized in that**:
a touch controller for sensing at least one touch coordinates of a touch via one of the TSP display and the touch key sensor by scanning the sensing channels; and
a processor for recognizing the touch as one of the first touch input with respect to the TSP display and the second touch input with respect to the touch key sensor based on whether the at least one touch coordinate comprise both an X-axis coordinate and a Y-axis coordinate.

3. The TSP display and touch key input apparatus of claim 2, **characterized in that** the processor recognizes the touch as the first touch input with respect to the touch key sensor, if the at least touch coordinate comprise a single one of, either the X-axis coordinate or the Y-axis coordinates of an axis corresponding to a sensing channel connected to the touch key sensor.

4. The TSP display and touch key input apparatus of claim 3, **characterized in that** the processor identifies a touch key matched to touch coordinate of the second touch in preset TSP key matrix information, and
the TSP key matrix information comprises information in which a touch key corresponding to the touch key sensor is mapped to coordinate corresponding to a sensing channel connected to the touch key sensor.

5. The TSP display and touch key input apparatus of claim 2, **characterized in that** the processor recognizes the touch as the second touch input with respect to the TSP display if the at least touch coordinate comprise both the X-axis coordinate and the Y-axis coordinate.

6. The TSP display and touch key input apparatus of claim 1, **characterized in that** the touch key sensor is implemented in a region other than the TSP display on a rear surface of window glass disposed on the TSP display.

7. A Touch Screen Panel (TSP) display and touch key input method **characterized by**:
sensing at least one touch coordinate of a touch via one of the TSP display an the touch key by scanning a plurality of sensing channels of the TSP display, the touch key having a touch key sensor being connected to a particular one of the plurality of sensing channels and being located outside an area of the TSP display;
distinguishing between a first touch input via the TSP display and a second touch input via the touch key sensor, in response touch detection scanning of the plurality of sensing channels; and
identifying the distinguished first touch input and second touch input.

8. The TSP display and touch key input method of claim 7, **characterized in that** the distinguishing comprises recognizing the touch as one of the first touch input with respect to the TSP display and the second touch input with respect to the touch key sensor based on whether the at least one touch coordinate comprise both an X-axis coordinate and a Y-axis coordinate.

9. The TSP display and touch key input method of claim 8, **characterized in that** the distinguishing comprises recognizing the touch as the second touch input with respect to the touch key sensor, if the at least one touch coordinate comprise a single one of either the X-axis coordinate or the Y-axis coordinates of an axis corresponding to a sensing channel connected to the touch key sensor.

10. The TSP display and touch key input method of claim 9, **characterized by** identifying a touch key matched to touch coordinate of the second touch in preset TSP key matrix information, wherein the TSP key matrix information comprises information in which a touch key corresponding to the touch key sensor is mapped to coordinate corresponding to a sensing channel connected to the touch key sensor.

11. The TSP display and touch key input method of claim 8, **characterized in that** the distinguishing comprises recognizing the touch as the first touch input with respect to the TSP display if the at least one touch coordinate comprises both an X-axis coordinate and a Y-axis coordinate.
